# EUROPEAN PATENT APPLICATION

(11) **EP 1 541 326 A1**
(43) Date of publication of application: **15.06.2005**
(21) Application number: 03771340.1
(22) Date of filing: 25.07.2003
(51) Int. Cl.: B29D 30/38

(54) **TIRE COMPONENT AFFIXING DEVICE**

(30) Priority: 25.07.2002 JP 2002216495
(71) Applicant: Bridgestone Corporation, Tokyo 104-8340 (JP)
(72) Inventor: SUDA, Nobuyuki, c/o Bridgestone Corporation, Kodaira-city, Tokyo 187-8531 (JP)
(74) Representative: Whalley, Kevin
(86) International application number: PCT/JP2003/009450
(87) International publication number: WO 2004/011236

(57) **Abstract**

An attaching head included in a tire component forming material attaching device is provided with upper and lower rollers supported for rotation. A tire component forming material is supplied from above the upper roller, is wound round the upper roller in a first direction, is wound round the lower roller in a second direction opposite the first direction. The tire component forming material is supplied automatically to the attaching head as the attaching head travels. The attaching device does not need to have any members, such as feed rollers, and does not need any driving means for driving feed rollers. The tire component forming material can be guided by the two rollers, namely, the upper and the lower roller, without using guide rollers. The attaching device consists of a small number of parts, is simple in construction and can be manufactured at a low cost.

## Description

### TECHNICAL FIELD

The present invention relates to a tire component forming material attaching device for delivering a tire component forming material of a predetermined small width having the shape of a belt onto a support device and attaching the tire component forming material to the support device by an attaching head.

### BACKGROUND ART

An attaching device of this kind is disclosed previously in WO 02/055289 (International publication).

This previously disclosed attaching device feeds a tire component forming material having the shape of a belt (hereinafter, referred to as "belt") to an attaching head that travels over a support device, the delivery rollers of the attaching head deliver the belt, a plurality of guide rollers guide the belt, and a pressure roller presses the belt against the support device to attach the belt to the support device.

The attaching head needs a driving means for rotating the delivery rollers. Thus the attaching device has complicated construction, needs many parts including the plurality of guide rollers and hence is costly.

### DISCLOSURE OF THE INVENTION

The present invention has been made in view of such problems and it is therefore an object of the present invention to provide a tire component forming material attaching device consisting of a comparatively small number of parts and simple in construction.

A tire component forming material attaching device according to the present invention for attaching a tire component forming material having the shape of a belt (hereinafter, referred to as "belt") of a predetermined small width to a support device includes an attaching head that travels over the support device and delivers the belt onto the support device; wherein the attaching head is provided with upper and lower rollers supported for rotation at different levels, respectively, the belt is supplied from above the upper roller, is wound over and round the upper roller in a first direction, is wound under and round the lower roller in a second direction opposite the first direction, the belt is delivered substantially horizontally from the lower roller onto the support device, and the belt delivered onto the support device is attached to the support device.

In the tire component forming material attaching device, the belt is wound over and round the upper roller of the attaching head in the first direction, the belt is wound under and round the lower roller in the second direction opposite the first direction, the belt is delivered substantially horizontally from the lower roller onto the support device, the belt delivered onto the support device is attached to the support device, and the belt is supplied automatically to the attaching head as the attaching head travels. Thus, the tire component forming material attaching device does not need any component parts corresponding to feed rollers, a driving means and guide rollers, and is capable of guiding the belt only by the two rollers, namely, the upper and the lower roller. Therefore, the tire component forming material attaching device consists of a comparatively small number of component parts, is simple in construction and can be manufactured at a low cost.

A part of the belt substantially horizontally laid on the support device by the lower roller can be sucked up and held by suction by a suction means held on the attaching head, and the attaching head holding a partly attached belt can be returned to a starting position.

The belt can be cut after a part of the belt has been attached to the support device with a cutting means disposed between the lower roller and the suction means by slightly raising the attaching head.

The belt can be cut with a cutting means disposed at a position corresponding to an end edge of the support device so that a cut end of the belt coincides with the end edge of the support device by sucking the belt after the attaching head has completed attaching a part of the belt to the support device. Cutting the belt with the cutting means in such a manner facilitates sucking, holding and moving a leading end of the belt by the suction means.

Since the rotating lower roller delivers the belt onto the support device and presses the belt against the upper surface of the support device to attach the belt to the support device as the attaching head travels. Thus any additional member corresponding to a pressure roller is not necessary, the tire component forming material attaching device needs less component parts, is simple in construction and can be manufactured at a reduced cost.

A plurality of grooves may be formed in one surface of the belt, and a guide plate provided with a plurality of ridges complementary to the grooves of the belt may be disposed between the upper and the lower roller so that the surface provided with the ridges of the guide plate comes into contact with the surface provided with the grooves of the belt to position the belt correctly relative to the lower roller as the belt is delivered onto the support device. Thus, the belt can be accurately positioned and delivered onto the support device without deforming edge parts of the belt.

The belt can be accurately attached to the support device by simple means including the grooves formed in the belt and disposing the guide plate provided with the ridges so as to be in contact with the belt. The guide plate may be small and can be held within the attaching head, which reduces the equipment cost.

The plurality of grooves of the belt may be V-grooves having a V-shaped cross section, arranged parallel to each other at fixed pitches. The ridges of the guide plate can easily engage in the V-grooves to deliver the belt accurately in a desired direction.

### BRIEF DESCRIPTION OF THE DRAWINGS

Fig. 1 is a schematic perspective view of a ply fabricating system employing a tire component forming material attaching device in a preferred embodiment according to the present invention;
Fig. 2 is a sectional view of a narrow belt and a narrow strip obtained by cutting the belt;
Fig. 3 is a plan view of a guide plate provided, showing a surface provided with ridges;
Fig. 4 is a sectional view of the guide plate shown in Fig. 3;
Fig. 5 is a schematic view of assistance in explaining a belt attaching operation of an attaching head included in the tire component forming material attaching device;
Fig. 6 is a sectional view of the belt attached to a support device;
Fig. 7 is a perspective view of the belt attached to the support device;

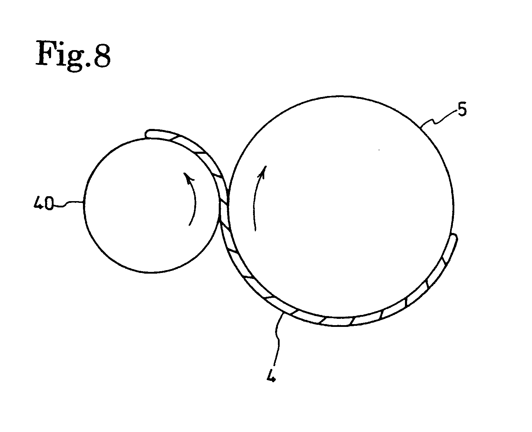

Fig. 8 is a side elevation of assistance in explaining a ply transfer operation for transferring a ply from the support device to a forming drum; and
Fig. 9 is a schematic view of assistance in explaining a belt attaching operation of an attaching head included in a tire component forming material attaching device in another embodiment according to the present invention.

### BEST MODE FOR CARRYING OUT THE INVENTION

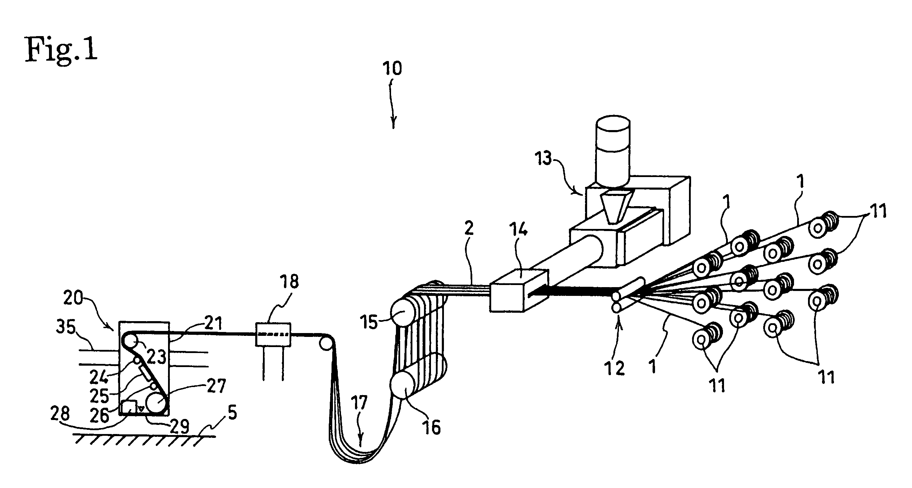

A preferred embodiment of the present invention will be described with reference to Figs. 1 to 7.

Fig. 1 is a schematic perspective view of a ply fabricating system 10 employing a tire component forming material attaching device in a preferred embodiment of the present invention for forming a carcass ply for a tire.

The ply fabricating system 10 carries out continuously a tire component forming material fabricating process for forming a narrow belt 2 by embedding parallel cords 1 in a rubber layer. The ply fabricating system 10 forms a carcass ply by successively attaching strips obtained by cutting the belt 2 to a transfer drum 5, namely, a support device.

Cords 1 unwound from a plurality of reels 11 are arranged parallel to each other by a guide 12, and the parallel cords 1 are fed into an insulation head 14 included in an extruder 13.

The extruder 13 coats the cords 1 with a rubber layer controlling the working pressure of the insulating head 14 to form a narrow belt 2 continuously.

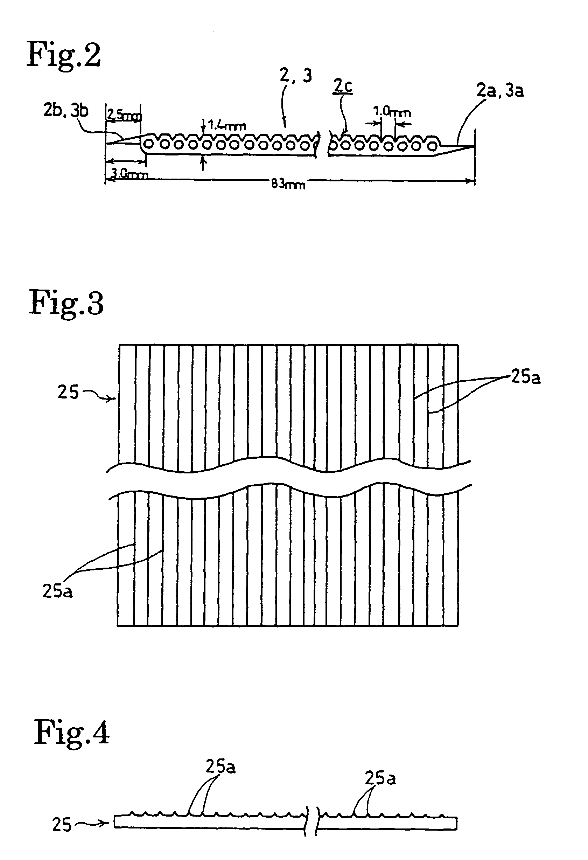

The insulation head 14 is provided with an extrusion die designed to extrude the belt 2 having a cross section as shown in Fig. 2.

The belt 2 has opposite edge parts 2a and 2b having a sectional shape resembling a half isosceles triangle.

The respective sectional shapes of the edge parts 2a and 2b are complementary to each other. The edge parts 2a and 2b are 2.5 mm in width. The distance between the edge of each of the edge parts 2a and 2b and the outermost cord 1 is about 3.0 mm. The belt 2 is 83 mm in overall width and 1.4 mm in thickness.

The circumference of a 1 in. diameter circle is about 80 mm.

A plurality of parallel, V-shaped ridges are formed on the upper side of the extrusion die to form a plurality of parallel, V-grooves 2c at pitches of 1 mm in one surface of the belt 2.

The V-grooves 2c have a depth in the range of 0.3 to 0.5 mm and an included angle of 60°.

The belt 2 having the foregoing sectional shape is formed continuously. A pull drum 15 pulls the belt 2 at a proper speed and a cooling drum 16 cools the belt 2. A guide 18 of a fixed width guides the belt 2 toward an attaching head 20. A festoon 17 is formed between the pull drum 15 and the guide 18.

The attaching head 20 has a case 21, a crowned roller 23, namely, an upper roller, disposed in an upper part of the case 21, a pressing roller 27, namely, a lower roller, disposed in a lower part of the case 21, a vacuum box 28, namely, a suction means, disposed in a lower part of the case 21, a guide plate 25 obliquely extending between the crowned roller 23 and the pressing roller 27, and free rollers 24 and 26 disposed at the opposite ends of the guide plate 25, respectively.

The belt 2 is supplied laterally from a direction opposite a forward direction in which the attaching head 20 travels for an attaching operation. The belt 2 is approximately centered by the guide 18 and is kept centered by the crowned roller 23.

The belt 2 travels obliquely downward from the crowned roller 23 via the free roller 24, the guide plate 25, the free roller 26 to the pressing roller 27. The belt 2 is wound round the pressing roller 27 in a winding direction opposite a winding direction in which the belt 2 is wound round the crowned roller 23. The belt 2 is delivered substantially horizontally onto the transfer drum 5. The belt 2 horizontally delivered onto the transfer drum 5 is pressed against and attached to the transfer drum by the pressing roller 27 or is attracted by suction to the lower surface of the vacuum box 28.

Referring to Figs. 3 and 4, the guide plate 25 is a rectangular plate having one surface provided with a plurality of parallel, straight ridges 25a.

The ridges 25a have an included acute angle and a height on the order of 0.25 mm.

The guide plate 25 is set obliquely at a predetermined position between the free rollers 24 and 26 with the surface provided with the ridges 25a facing upward. Thus the ridges 25a extend so as to decline from the free roller 24 toward the free roller 26.

The belt 2 travels such that the surface provided with the V-grooves 2c slides along the surface provided with the ridges 25a of the guide plate 25. Consequently, the ridges 25a of the guide plate 25 are able to engage easily in the V-grooves 2c to position the belt 2 accurately and to guide the belt 2 so as to travel accurately in a desired direction.

The attaching head 20 is supported on and moves along a rail 35 extended above the transfer drum 5 in parallel to the axis of the transfer drum 5. The attaching head 20 is driven for reciprocation along the rail 35 by a driving device, not shown.

The attaching head 20 has a lifting mechanism.

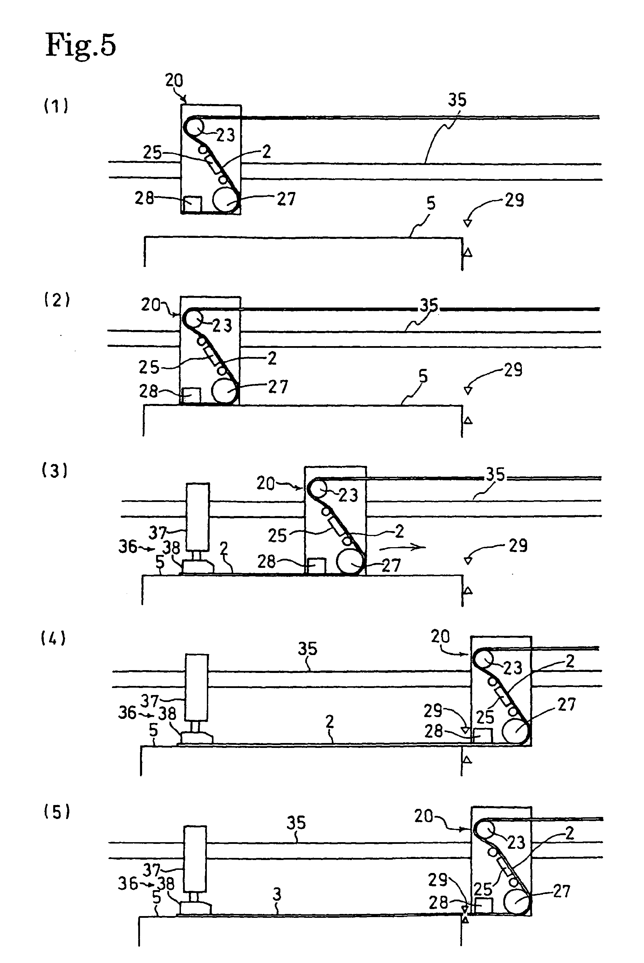

An attaching process for attaching strips 3 to the transfer drum 5 by the attaching head 20 will be described with reference to Fig. 5.

Referring to Fig. 5(1), the attaching head 20 is positioned at a starting position above a position on the transfer drum 5 where the free end of the belt 2 is attached. The belt 2 supplied to the attaching head 20 is extended via the crowned roller 23, the guide plate 25 and the pressing roller 27 to the vacuum box 28, and a free end part of the belt 2 is attracted by suction to the lower surface of the vacuum box 28.

Then, as shown in Fig. 5(2), the attaching head 20 is lowered so as to press the free end part of the belt 2 against the starting position on the transfer drum 5 with the pressing roller 27, and the free end part of the belt 2 is released from the vacuum box 28.

Then, the attaching head 20 is driven for a forward travel to lay the belt 2 continuously on the transfer drum 5 and to press the belt 2 laid on the transfer drum 5 by the pressing roller 27 against the transfer drum 5 as shown in Fig. 5(3).

The crowned roller 23 centers the belt 2 and the guide plate 25 restrains the belt 2 from lateral movement to position the belt 2 accurately. Consequently, the belt 2 is attached accurately to a part at a desired position of the transfer drum 5.

A holding device 36 provided with a cylinder actuator 37 is moved to a position above the free end part of the belt 2 laid on the transfer drum 5, and the cylinder actuator 37 presses a holding member 38 against the free end part of the belt 2 after the attaching head 20 has started out from the starting position. Thus, the free end part of the belt 2 is held firmly in place on the transfer drum 5 and the belt 2 laid on the transfer drum 5 will not come off even if the same is pulled.

Then, as shown in Fig. 5(4), a part of the belt 2 is sucked to the vacuum box 28 after the attaching head has traveled in the forward direction beyond one end of the transfer drum 5. Then, the belt 2 is cut by a cutter 29 disposed at a position corresponding to an end edge of the transfer drum 5 as shown in Fig. 5(5) to lay a strip 3 of a predetermined length on the transfer drum 5.

Subsequently, the holding device 36 is retracted, the attaching head is raised, and the attaching head 20 is moved for a return travel in the reverse direction, namely, a return direction, to the starting position as shown in Fig. 5(1).

The transfer drum 5 is turned to move the surface thereof in a feed direction for a circumferential distance of about 80 mm while the attaching head 20 is moving for the return travel.

Thus, a laying cycle is completed. The joining cycle is repeated predetermined times.

The transfer drum 5 is thus turned to feed the preceding strip 3 laid on the transfer drum 5 by the predetermined circumferential distance such that an edge part 3a of the succeeding strip 3 is superposed on an edge part 3b of the preceding strip 3.

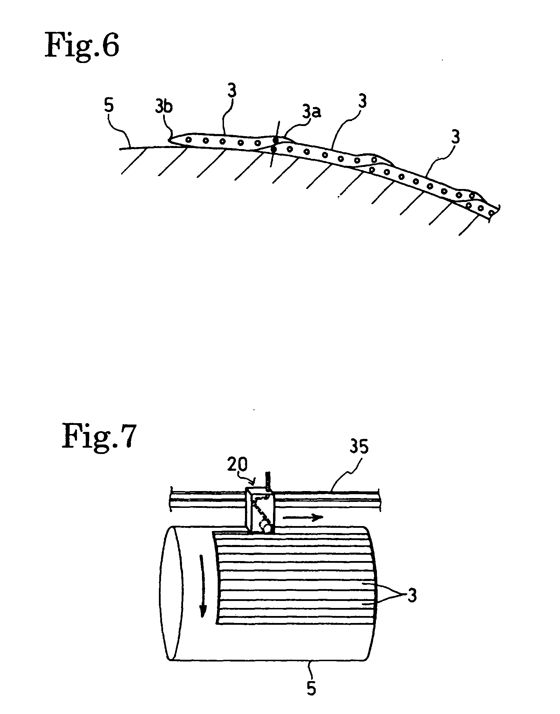

The cords 1 of the belt 2 are arranged such that the outermost cord 1 in the edge part 3b of the succeeding strip 3 is superposed on the outermost cord 1 in the edge part 3a of the preceding strip 3 when the preceding and the succeeding strip 3 are thus laid on the transfer drum 5 as shown in Fig. 6.

Since the strip 3 provided with the V-grooves 2c is positioned accurately by the ridges 25a of the guide plate 25, the strip 3 is laid accurately on the transfer drum 5. Consequently, the corresponding edge parts of the preceding and the succeeding strip 3 can be accurately superposed with the outermost cords 1 therein superposed and hence the strips 3 can be firmly joined together.

The laying cycle is repeated to lay strips 3 successively on the transfer drum 5 as shown in Fig. 7.

The strip 3 laid on the transfer drum 5 is fed in a circumferential direction for a distance corresponding to the circumference of a circle of a diameter approximately equal to 1 in. Therefore, the laying cycle is repeated fifteen times to lay fifteen strips 3 successively on the transfer drum 5 and the strips 3 are joined successively when the tire component forming material attaching device operates to form a carcass ply sheet for forming a carcass ply for a 15 in. diameter tire.

After a carcass ply sheet 4 has been formed by successively laying and joining a predetermined number of strips 3 on the transfer drum 5, one end of the carcass ply sheet 4 is held between the transfer drum 5 and the forming drum 40, and the transfer drum 5 and the forming drum 40 are turned in the opposite directions, respectively, to transfer the carcass ply sheet 4 from the transfer drum 5 to the forming drum 40.

The leading and the trailing edge part of the carcass ply sheet 4 are superposed and joined together to form an annular carcass ply. The annular carcass ply is used for building a tire.

The belt 2 is supplied automatically to the attaching head 20 as the attaching head 20 travels and the lower pressing roller 27 rolls, delivers the belt 2 onto the transfer drum 5 and presses the belt 2 against the circumference of the transfer drum 5. Thus, the tire component forming material attaching device does not need any component parts corresponding to feed rollers and a driving means for driving the feed rollers. The attaching head 20 is capable of guiding the belt 2 only by the two rollers, namely, the crowned roller 23 and the pressing roller 27. Therefore, the tire component forming material attaching device consists of a comparatively small number of component parts, is simple in construction and can be manufactured at a low cost.

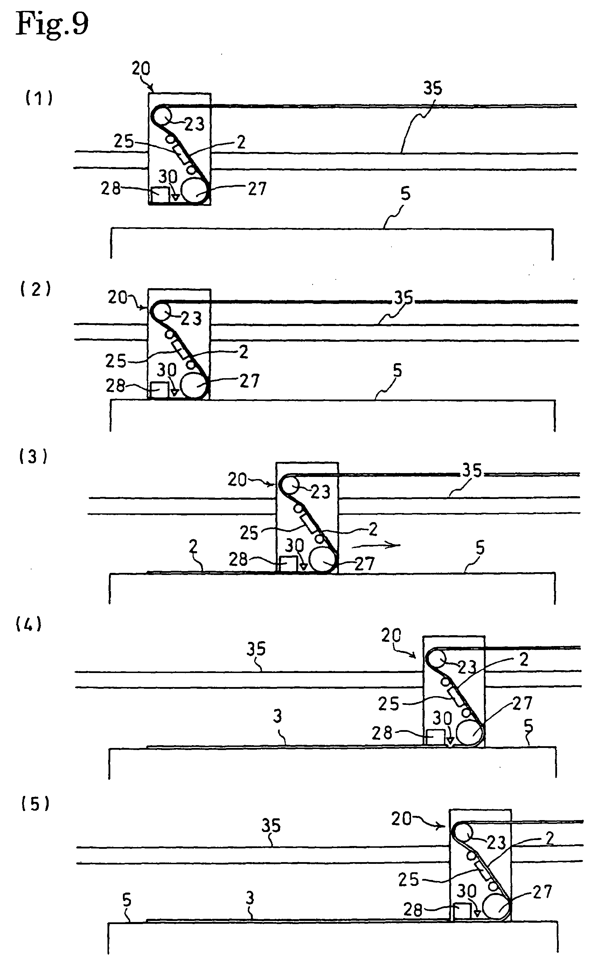

A belt attaching operation of an attaching head included in a tire component forming material attaching device in another embodiment of the present invention will be described with reference to Fig. 9.

An attaching head 20 included in the tire component forming material attaching device in the second embodiment is the same in construction as the attaching head 20 included in the tire component forming material attaching device in the first embodiment, except that the former attaching head 20 is internally provided with a cutter 30 disposed between a pressing roller 27 and a vacuum box 28.

Referring to Fig. 9(1), the attaching head 20 is positioned at a starting position above a position on a transfer drum 5 where the free end of a belt 2 is attached. Then, as shown in Fig. 9(2), the attaching head 20 is lowered so as to press the free end part of the belt 2 against a part of the transfer drum 5 under the starting position with the pressing roller 27, and the free end part of the belt 2 is released from the vacuum box 28. Then, the attaching head 20 travels as shown in Fig. 9(3). Steps illustrated in Figs. 9(1) to 9(3) are the same as those illustrated in Figs. 5(1) to 5(3).

Then, as shown in Fig. 9(4), the attaching head 20 is raised slightly after a length of the belt 2 longer than a predetermined length has been laid on the transfer drum 5, and the belt 2 is cut in a predetermined length by the cutter disposed between the vacuum box 28 and the pressing roller 27 to lay a strip 3 of the predetermined length on the transfer drum 5.

Subsequently, the attaching head 20 is moved in the forward direction to a position where the vacuum box 28 coincides with a trailing end part of the cut belt 2, the vacuum box 28 sucks up the trailing end part of the belt 2 as shown in Fig. 9(5). Then, the attaching head 20 is returned to the starting position as shown in Fig. 9(1).

Strips 3 are thus successively attached to the transfer drum.

Although the tire component forming material attaching devices in the foregoing preferred embodiments lay the strips 3 in an annular sheet on the cylindrical circumference of the transfer drum 5, the strips 3 may be laid in a flat sheet on flat surface, such as the surface of a conveyor belt or a plate that translates, to form a carcass ply sheet 4.

### INDUSTRIAL APPLICABILITY

The present invention is applied to the production of tires.

## Claims

1. A tire component forming material attaching device for attaching a tire component forming material having the shape of a belt of a predetermined small width to a support device, said tire component forming material attaching device comprising:
an attaching head that travels over the support device and delivers the tire component forming material onto the support device;
wherein the attaching head is provided with upper and lower rollers supported for rotation at different levels, respectively, the tire component forming material is supplied from above the upper roller, is wound over and round the upper roller in a first direction, is wound under and round the lower roller in a second direction opposite the first direction, the tire component forming material is delivered substantially horizontally from the lower roller onto the support device, and the tire component forming material delivered onto the support device is attached to the support device.

2. The tire component forming material attaching device according to claim 1, wherein a part of the tire component forming material substantially horizontally laid on the support device can be sucked up and held by suction by a suction means held on the attaching head.

3. A tire component forming material attaching device according to claim 2, wherein a cutting means is disposed between the lower roller and the suction means.

4. The tire component forming material attaching device according to claim 1 or 2, a cutting means is disposed at a position corresponding to an end edge of the support device.

5. The tire component forming material attaching device according to claim 1 or 2, wherein the rotating lower roller delivers the tire component forming material onto the support device and presses the tire component forming material against the upper surface of the support device to attach the tire component forming material to the support device as the attaching head travels.

6. The tire component forming material attaching device according to claim 1 or 2, wherein a plurality of grooves are formed in one surface of the tire component forming material, and a guide plate provided with a plurality of ridges complementary to the grooves of the tire component forming material is disposed between the upper and the lower roller so that the surface provided with the ridges of the guide plate comes into contact with the surface provided with the grooves of the tire component forming material to position the belt correctly relative to the lower roller.

7. The tire component forming material attaching device according to claim 6, wherein the plurality of grooves of the tire component forming material are V-grooves having a V-shaped cross section, arranged parallel to each other at fixed pitches.
